# EUROPEAN PATENT APPLICATION

(11) **EP 4 848 565 A1**
(43) Date of publication of application: **02.12.2026**
(21) Application number: 26181198.8
(22) Date of filing: 27.05.2026
(51) Int. Cl.: H02M 7/5395, H02M 1/00, H02M 1/32, H02M 7/5387

(54) **INVERTER AND OUTPUT CURRENT ANOMALY PROTECTION METHOD THEREFOR**

(30) Priority: 27.05.2025 CN 202510694577
(71) Applicant: Huawei Technologies Co., Ltd., Shenzhen, Guangdong 518129 (CN)
(72) Inventor: LI, Junjie, Shenzhen, 518129 (CN); YU, Xinyu, Shenzhen, 518129 (CN); XIN, Kai, Shenzhen, 518129 (CN)
(74) Representative: Isarpatent

(57) **Abstract**

This application provides an inverter and an output current anomaly protection method therefor. An instantaneous output current value is compared with an instantaneous reference current value in real time. When an absolute value of a difference between the instantaneous output current value and the instantaneous reference current value is greater than a specified protection threshold, it is considered that an output current is abnormal. Sending a PWM driver gating signal is stopped when it is determined that the absolute value is greater than the protection threshold for specified duration, to avoid frequently stopping sending a PWM driver gating signal due to misjudgment. Stopping sending a PWM driver gating signal is to turn off a switching transistor, to cut off an output of the inverter, to avoid a continuous increase in the output current and protect the inverter against further damage. Whether an abnormal working condition in which the output current deviates from a reference current value occurs is determined, so that an abnormal current can be recognized at an initial moment at which a fault occurs, to reduce voltage or current stress applied to a component of the inverter when sending a PWM driver gating signal is stopped, and improve reliability of the inverter.

## Description

### TECHNICAL FIELD

The present invention relates to the field of power electronics technologies, and in particular, to an inverter and an output current anomaly protection method therefor.

### BACKGROUND

An inverter is an important component of a new energy power generation device. The inverter is configured to convert a direct current provided by a direct current source, for example, a PV module or an energy storage system, into an alternating current for output. With development of science and technology, a requirement for output power and an output voltage of the inverter gradually increases. This imposes a higher requirement on safety and reliability of a power conversion module in the inverter. When an excessively large output current triggers a protection mechanism and the inverter stops sending a PWM driver gating signal, with an increase in the output power and the output voltage, voltage and current stress that a component of the power conversion module in the inverter needs to be subject to also increases correspondingly, leading to a risk of a component failure due to excessively high voltage or current stress. Therefore, how to reduce voltage or current stress applied to a component of an inverter when an abnormal output current of the inverter triggers the inverter to stop sending a PWM driver gating signal is a technical problem that urgently needs to be resolved in the art.

### SUMMARY

This application provides an inverter and an output current anomaly protection method therefor, to reduce voltage or current stress applied to a component of an inverter when an abnormal output current of the inverter triggers the inverter to stop sending a PWM driver gating signal.

According to a first aspect, this application provides an inverter, an inverter circuit, and a controller. The inverter circuit usually includes a plurality of inverter bridge arms, and each inverter bridge arm includes a switching transistor. An input end of the inverter circuit is configured to connect to a direct current bus. An output end of the inverter circuit is configured to connect to a power grid or a load. The inverter circuit is configured to convert a direct current provided by the direct current bus into an alternating current for output. The direct current bus may be directly connected to a direct current source, for example, a PV module or an energy storage system. The controller is configured to provide a pulse width modulation (pulse width modulation, PWM) signal for the inverter circuit, to control the switching transistor of the inverter circuit to switch between on and off.

In this application, the controller is configured to: when an absolute value of a difference between an instantaneous output current value and an instantaneous reference current value (which may also be referred to as a target current value) of the inverter circuit is greater than a protection threshold for specified duration, stop sending a PWM driver gating signal, in other words, control the switching transistor to be turned off. The instantaneous output current value varies with the instantaneous reference current value. The instantaneous reference current value is specifically a current command reference value determined based on an operating status of the inverter or a theoretical output current value predicted by using a model. When a component in the inverter circuit is normal, the instantaneous output current value of the inverter circuit is approximately consistent with the instantaneous reference current value, in other words, a deviation between the instantaneous output current value and the instantaneous reference current value is small. When the component in the inverter circuit fails, an output current of the inverter circuit is abnormal, and consequently, the difference between the instantaneous output current value and the instantaneous reference current value increases. In this application, the instantaneous output current value is compared with the instantaneous reference current value in real time. When the absolute value of the difference between the instantaneous output current value and the instantaneous reference current value is greater than (or exceeds) the specified protection threshold, it is considered that the output current is abnormal. Sending a PWM driver gating signal is stopped when it is determined that the absolute value is greater than the protection threshold for the specified duration, to avoid frequently stopping sending a PWM driver gating signal due to misjudgment. Stopping sending a PWM driver gating signal is to turn off the switching transistor in the inverter circuit, to cut off an output of the inverter, to avoid a continuous increase in the output current and protect the inverter against further damage.

In comparison, in an existing output current anomaly determining mechanism, stopping sending a PWM driver gating signal is triggered for an abnormal output current only when an output current is greater than an upper current threshold that is a constant value or when an output current is less than a lower current threshold that is a constant value. Consequently, sending a PWM driver gating signal is stopped at a late time point after the abnormal output current is recognized, and sending a PWM driver gating signal is stopped only when an absolute value of the output current is large. Therefore, a switching transistor in an inverter needs to be subject to high voltage and current stress, leading to a risk of a component failure due to excessively high voltage or current stress. In addition, because an output current of the inverter at an initial moment at which a fault occurs does not meet a condition for stopping sending a PWM driver gating signal, sending a PWM driver gating signal cannot be stopped at the initial moment at which the fault occurs, leading to expansion of an area affected by the fault. In an output current anomaly determining mechanism provided in this application, at any moment of an output current waveform of the inverter circuit, provided that the absolute value of the difference between the instantaneous output current value and the instantaneous reference current value increases to be greater than the protection threshold, it can be determined that an output current is in an abnormal working condition. An abnormal output current may be recognized at an initial moment at which a fault occurs, and sending a PWM driver gating signal is immediately stopped, without waiting until the output current increases to a large value. In this way, when sending a PWM driver gating signal is stopped, voltage and current stress that the switching transistor needs to be subject to is low, to reduce a risk of a component failure due to excessively high voltage or current stress. In addition, because the abnormal output current is recognized at the initial moment at which the fault occurs and sending a PWM driver gating signal is immediately stopped, expansion of an area affected by the fault can be further avoided.

In this application, the protection threshold may be determined based on the operating status of the inverter. In some embodiments of this application, the protection threshold may be set to a constant value that does not vary with time, that is, a fixed value, to reduce an amount of calculation of the controller. A current anomaly protection curve may be obtained based on the protection threshold and the instantaneous reference current value. The current anomaly protection curve specifically includes a first protection curve obtained by superposing the instantaneous reference current value and the protection threshold, and a second protection curve obtained by subtracting the protection threshold from the instantaneous reference current value. If the output current is within a range between the first protection curve and the second protection curve, it is considered that the output current is normal. If the output current is beyond the range between the first protection curve and the second protection curve, it is considered that the output current is abnormal, and sending a PWM driver gating signal needs to be stopped.

In some other embodiments of this application, the protection threshold may be dynamically adjusted based on the operating status of the inverter. For example, the protection threshold is dynamically adjusted based on the following parameters: a direct current bus voltage, namely, an input voltage, the instantaneous reference current value, a difference between the input voltage and an output voltage amplitude, the output voltage amplitude, a load power factor, a modulation mode, and a switching frequency.

Specifically, the protection threshold may be controlled to be in a positive correlation relationship with an absolute value of the instantaneous reference current value of the inverter circuit. To be specific, a larger instantaneous reference current value indicates a larger protection threshold, and a smaller instantaneous reference current value indicates a smaller protection threshold.

Specifically, the protection threshold may be controlled to be in a positive correlation relationship with the input voltage value of the inverter circuit. To be specific, a larger input voltage value indicates a larger protection threshold, and a smaller input voltage value indicates a smaller protection threshold.

Specifically, the protection threshold may be controlled to be in a positive correlation relationship with the difference between the input voltage value and the output voltage amplitude of the inverter circuit. To be specific, a larger difference between the input voltage value and the output voltage amplitude indicates a larger protection threshold, and a smaller difference between the input voltage value and the output voltage amplitude indicates a smaller protection threshold.

Specifically, the protection threshold may be controlled to be in a negative correlation relationship with the output voltage amplitude of the inverter circuit. To be specific, a smaller output voltage amplitude indicates a larger protection threshold, and a larger output voltage amplitude indicates a smaller protection threshold.

Specifically, the protection threshold may be controlled to be in a negative correlation relationship with an absolute value of the load power factor of the inverter circuit. To be specific, a smaller absolute value of the load power factor indicates a larger protection threshold, and a larger absolute value of the load power factor indicates a smaller protection threshold.

Specifically, the protection threshold may be controlled to be in a negative correlation relationship with the switching frequency of the inverter circuit. To be specific, a lower switching frequency indicates a larger protection threshold, and a higher switching frequency indicates a smaller protection threshold.

Specifically, the protection threshold in a case in which the inverter circuit is in discontinuous modulation (DPWM) control may be controlled to be less than the protection threshold in a case in which the inverter circuit is in continuous modulation (SPWM) control.

Specifically, the protection threshold may be controlled to be in a negative correlation relationship with modulated-wave clamping time of the inverter circuit. To be specific, shorter modulated-wave clamping time indicates a larger protection threshold, and longer modulated-wave clamping time indicates a smaller protection threshold.

In some embodiments of this application, when the controller compares the instantaneous output current value with the instantaneous reference current value in real time, the controller may use an average value of instantaneous output current sampling values within a switching cycle as the instantaneous output current value of the inverter circuit, to reduce an amount of calculation of the controller and increase a calculation speed.

In some embodiments of this application, when the controller compares the instantaneous output current value with the instantaneous reference current value in real time, the controller may directly use an instantaneous output current sampling value as the instantaneous output current value of the inverter circuit, to improve accuracy of calculation performed by the controller to determine whether the output current is abnormal.

In some embodiments of this application, during operation, the inverter may determine, in real time, whether an absolute value of a variation of an output voltage of the inverter is greater than a preset voltage threshold, and determine, in real time, whether an absolute value of a variation of the instantaneous reference current value of the inverter circuit is greater than a preset current threshold. The absolute value of the variation of the instantaneous reference current value being less than the preset current threshold and the absolute value of the variation of the output voltage being less than the preset voltage threshold indicates that the inverter is not in a steady operating state at a present moment, and the foregoing output current anomaly protection determining provided in this application may be performed.

According to a second aspect, this application provides an output current anomaly protection method for an inverter, including: when an absolute value of a difference between an instantaneous output current value and an instantaneous reference current value of the inverter is greater than a protection threshold for specified duration, stopping sending a PWM driver gating signal, in other words, controlling a switching transistor in the inverter to be turned off, where the instantaneous output current value varies with the instantaneous reference current value, and the instantaneous reference current value is specifically a current command reference value determined based on an operating status of the inverter or a theoretical output current value predicted by using a model. When a component in the inverter is normal, the instantaneous output current value of the inverter is approximately consistent with the instantaneous reference current value, in other words, a deviation between the instantaneous output current value and the instantaneous reference current value is small. When the component in the inverter fails, an output current of the inverter is abnormal, and consequently, the difference between the instantaneous output current value and the instantaneous reference current value increases. In this application, the instantaneous output current value is compared with the instantaneous reference current value in real time. When the absolute value of the difference between the instantaneous output current value and the instantaneous reference current value is greater than (or exceeds) the specified protection threshold, it is considered that the output current is abnormal. Sending a PWM driver gating signal is stopped when it is determined that the absolute value is greater than the protection threshold for the specified duration, to avoid frequently stopping sending a PWM driver gating signal due to misjudgment. Stopping sending a PWM driver gating signal is to turn off the switching transistor, to cut off an output of the inverter, to avoid a continuous increase in the output current and protect the inverter against further damage.

In comparison, in an existing output current anomaly determining mechanism, stopping sending a PWM driver gating signal is triggered for an abnormal output current only when an output current is greater than an upper current threshold that is a constant value or when an output current is less than a lower current threshold that is a constant value. Consequently, sending a PWM driver gating signal is stopped at a late time point after the abnormal output current is recognized, and sending a PWM driver gating signal is stopped only when an absolute value of the output current is large. Therefore, a switching transistor in an inverter needs to be subject to high voltage and current stress, leading to a risk of a component failure due to excessively high voltage or current stress. In addition, because an output current of the inverter at an initial moment at which a fault occurs does not meet a condition for stopping sending a PWM driver gating signal, sending a PWM driver gating signal cannot be stopped at the initial moment at which the fault occurs, leading to expansion of an area affected by the fault. In an output current anomaly determining mechanism provided in this application, at any moment of an output current waveform of the inverter, provided that the absolute value of the difference between the instantaneous output current value and the instantaneous reference current value increases to be greater than the protection threshold, it can be determined that the output current is in an abnormal working condition. An abnormal output current may be recognized at an initial moment at which a fault occurs, and sending a PWM driver gating signal is immediately stopped, without waiting until the output current increases to a large value. In this way, when sending a PWM driver gating signal is stopped, voltage and current stress that the switching transistor needs to be subject to is low, to reduce a risk of a component failure due to excessively high voltage or current stress. In addition, because the abnormal output current is recognized at the initial moment at which the fault occurs and sending a PWM driver gating signal is immediately stopped, expansion of an area affected by the fault can be further avoided.

In this application, the protection threshold may be determined based on the operating status of the inverter.

In some embodiments of this application, the protection threshold may be set to a constant value that does not vary with time, that is, a fixed value, to reduce an amount of calculation.

In some other embodiments of this application, the protection threshold may be dynamically adjusted based on the operating status of the inverter. For example, the protection threshold is dynamically adjusted based on the following parameters: a direct current bus voltage, namely, an input voltage, the instantaneous reference current value, a difference between the input voltage and an output voltage amplitude, the output voltage amplitude, a load power factor, a modulation mode, and a switching frequency.

Specifically, the protection threshold may be controlled to be in a positive correlation relationship with an absolute value of the instantaneous reference current value of the inverter. To be specific, a larger instantaneous reference current value indicates a larger protection threshold, and a smaller instantaneous reference current value indicates a smaller protection threshold.

Specifically, the protection threshold may be controlled to be in a positive correlation relationship with the input voltage value of the inverter. To be specific, a larger input voltage value indicates a larger protection threshold, and a smaller input voltage value indicates a smaller protection threshold.

Specifically, the protection threshold may be controlled to be in a positive correlation relationship with the difference between the input voltage value and the output voltage amplitude of the inverter. To be specific, a larger difference between the input voltage value and the output voltage amplitude indicates a larger protection threshold, and a smaller difference between the input voltage value and the output voltage amplitude indicates a smaller protection threshold.

Specifically, the protection threshold may be controlled to be in a negative correlation relationship with the output voltage amplitude of the inverter. To be specific, a smaller output voltage amplitude indicates a larger protection threshold, and a larger output voltage amplitude indicates a smaller protection threshold.

Specifically, the protection threshold may be controlled to be in a negative correlation relationship with an absolute value of the load power factor of the inverter. To be specific, a smaller absolute value of the load power factor indicates a larger protection threshold, and a larger absolute value of the load power factor indicates a smaller protection threshold.

Specifically, the protection threshold may be controlled to be in a negative correlation relationship with the switching frequency of the inverter. To be specific, a lower switching frequency indicates a larger protection threshold, and a higher switching frequency indicates a smaller protection threshold.

Specifically, the protection threshold in a case in which the inverter is in discontinuous modulation (DPWM) control may be controlled to be less than the protection threshold in a case in which the inverter is in continuous modulation (SPWM) control.

Specifically, the protection threshold may be controlled to be in a negative correlation relationship with modulated-wave clamping time of the inverter. To be specific, shorter modulated-wave clamping time indicates a larger protection threshold, and longer modulated-wave clamping time indicates a smaller protection threshold.

In some embodiments of this application, when the instantaneous output current value is compared with the instantaneous reference current value in real time, an average value of instantaneous output current sampling values within a switching cycle may be used as the instantaneous output current value of the inverter, to reduce an amount of calculation and increase a calculation speed.

In some embodiments of this application, when the instantaneous output current value is compared with the instantaneous reference current value in real time, an instantaneous output current sampling value may be directly used as the instantaneous output current value of the inverter, to improve accuracy of calculation performed to determine whether the output current is abnormal.

In some embodiments of this application, during operation, the inverter may determine, in real time, whether an absolute value of a variation of an output voltage is greater than a preset voltage threshold, and determine, in real time, whether an absolute value of a variation of the instantaneous reference current value is greater than a preset current threshold. The absolute value of the variation of the output voltage being less than the preset voltage threshold and the absolute value of the variation of the instantaneous reference current value being less than the preset current threshold indicates that the inverter is not in a steady operating state at a present moment, and the foregoing output current anomaly protection determining provided in this application may be performed.

For technical effects that can be achieved by any possible design of the second aspect, refer to the technical effects that can be achieved by any possible design of the first aspect. Details are not described herein again. These aspects or other aspects of this application are clearer and more comprehensible in descriptions of the following embodiments.

### BRIEF DESCRIPTION OF DRAWINGS

FIG. 1 is a diagram of an architecture of a PV energy storage system;
FIG. 2 is a diagram of a waveform of an existing output current anomaly determining mechanism;
FIG. 3 is a diagram of a circuit structure of an inverter according to an embodiment of this application;
FIG. 4a is a diagram of a current anomaly protection curve according to an embodiment of this application;
FIG. 4b is a diagram of another current anomaly protection curve according to an embodiment of this application;
FIG. 5a is a diagram of another current anomaly protection curve according to an embodiment of this application;
FIG. 5b is a diagram of another current anomaly protection curve according to an embodiment of this application;
FIG. 6a is a diagram of an output current waveform in a case in which an existing output current anomaly determining mechanism is used;
FIG. 6b is a diagram of an output current waveform upon a short-circuit fault of a switching transistor in a case in which an output current anomaly determining mechanism provided in this application is used;
FIG. 6c is a diagram of an output current waveform upon an open-circuit fault of a switching transistor in a case in which an output current anomaly determining mechanism provided in this application is used; and
FIG. 7 is a schematic flowchart of an output current anomaly protection method for an inverter according to an embodiment of this application.

### DESCRIPTION OF EMBODIMENTS

To make the objectives, technical solutions, and advantages of this application clearer, the following further describes this application in detail with reference to the accompanying drawings. However, example implementations may be implemented in a plurality of forms and should not be construed as being limited to implementations described herein. Instead, these implementations are provided to make this application more comprehensive and complete and to fully convey the concept of the example implementations to a person skilled in the art. Same reference numerals in the drawings indicate same or similar structures. Therefore, repeated descriptions thereof are omitted. Expressions of positions and directions in this application are described by using the accompanying drawings as an example. However, changes may alternatively be made as needed, and all the changes fall within the protection scope of this application. The accompanying drawings in this application are merely used to illustrate relative positional relationships and do not represent an actual scale.

It should be noted that specific details are described in the following descriptions for ease of fully understanding this application. However, this application can be implemented in a plurality of other manners different from those described herein, and a person skilled in the art may perform similar promotion without departing from the connotation of this application. Therefore, this application is not limited to the following disclosed specific implementations. The following descriptions of this specification are example implementations of implementing this application. However, the descriptions are intended to describe the general principle of this application, but not to limit the scope of this application. The protection scope of this application shall be defined by the appended claims.

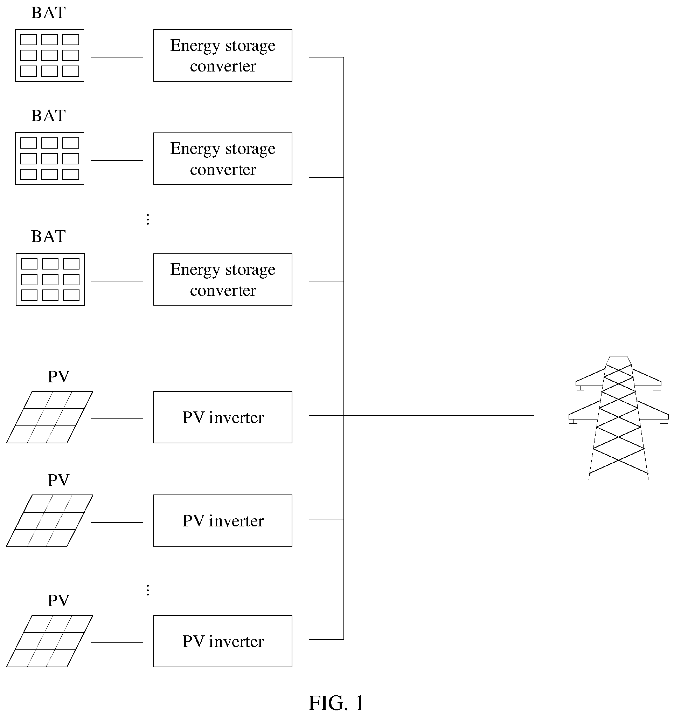

As shown in FIG. 1, a PV energy storage system (which stands for a solar PV energy storage and power generation system) includes a PV system and an energy storage system. In the PV system, a PV module PV directly converts solar energy into electric energy through PV effect. The PV module PV usually includes a plurality of cells connected in series or in parallel, to achieve specific output power. A PV inverter is configured to convert a direct current from the PV module PV into an alternating current, and transmit the alternating current to a power grid or a load. In the energy storage system, an energy storage battery BAT can store unstable electric energy, and convert a direct current into an alternating current through an energy storage converter, to transmit stable electric energy to the power grid or the load. In addition, an alternating current of the power grid can also be converted into a direct current through the energy storage converter to charge the energy storage battery, and then electric energy is stored in the energy storage battery BAT.

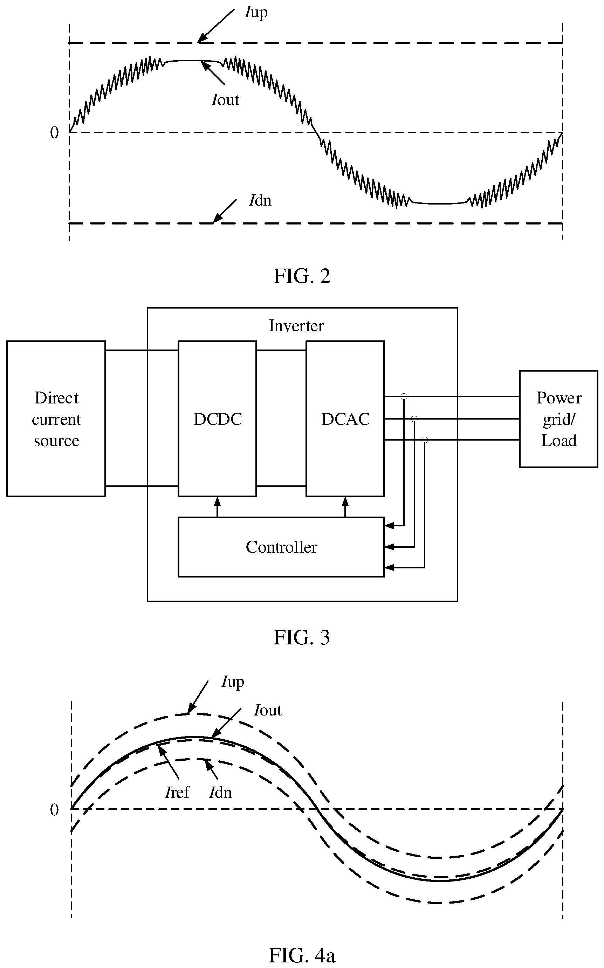

Power conversion devices such as the PV inverter and the energy storage converter may be collectively referred to as an inverter. As shown in FIG. 2, a conventional output current anomaly protection method for an inverter is as follows: When an output current Iout of the inverter is greater than an upper current threshold Iup that is a constant value or the output current Iout is less than a lower current threshold Idn that is a constant value, stopping sending a PWM driver gating signal is triggered. To be specific, a trigger condition for stopping sending a PWM driver gating signal, that is, being greater than the upper current threshold Iup or less than the lower current threshold Idn, is met only when an absolute value of the output current Iout is large. Consequently, sending a PWM driver gating signal is stopped at a late time point after an abnormal output current is recognized, and sending a PWM driver gating signal is stopped only when an absolute value of the output current is large. Therefore, a component (usually a switching transistor) in a power conversion module needs to be subject to high voltage and current stress, leading to a risk of a component failure due to excessively high voltage or current stress. In addition, because an output current of the inverter at an initial moment at which a fault occurs does not meet a condition for stopping sending a PWM driver gating signal, sending a PWM driver gating signal cannot be stopped at the initial moment at which the fault occurs, leading to expansion of an area affected by the fault.

In view of this, embodiments of this application provide an inverter and an output current anomaly protection method therefor. Whether an abnormal working condition in which an output current deviates from a target current (namely, a reference current value) occurs is determined, so that an abnormal current can be recognized at an initial moment at which a fault occurs, to reduce voltage or current stress applied to a component of the inverter when sending a PWM driver gating signal is stopped, and improve reliability of the inverter.

In addition to being used in a PV inverter and an energy storage converter, the inverter provided in this application may be further used in other grid-forming power electronic devices and high-power grid-connected power electronic devices, for example, a static var generator (static var generator, SVG), a static synchronous condenser, and a modular multilevel converter (modular multilevel converter, MMC) flexible direct current converter valve.

As shown in FIG. 3, the inverter provided in embodiments of this application includes an inverter circuit DCAC and a controller. The inverter circuit DCAC usually includes a plurality of inverter bridge arms, and each inverter bridge arm includes a switching transistor. An input end of the inverter circuit DCAC is configured to connect to a direct current bus. An output end of the inverter circuit DCAC is configured to connect to a power grid or a load. The inverter circuit DCAC is configured to convert a direct current provided by the direct current bus into an alternating current for output. The direct current bus may be directly connected to a direct current source, for example, a PV module or an energy storage system. In some other embodiments of this application, the direct current bus may alternatively be connected to the direct current source through a direct current conversion circuit DCDC. To be specific, an input end of the direct current conversion circuit DCDC is configured to connect to the direct current source, an output end of the direct current conversion circuit DCDC is configured to connect to the direct current bus, and the direct current conversion circuit DCDC is configured to convert electric energy provided by the direct current source into a direct current for output. The controller is configured to provide a pulse width modulation (pulse width modulation, PWM) signal for the inverter circuit DCAC, to control the switching transistor of the inverter circuit DCAC to switch between on and off.

In this application, the controller is configured to: when an absolute value of a difference between an instantaneous output current value and an instantaneous reference current value (which may also be referred to as a target current value) of the inverter circuit DCAC is greater than a protection threshold for specified duration, stop sending a PWM driver gating signal, in other words, control the switching transistor to be turned off. The instantaneous output current value varies with the instantaneous reference current value. The instantaneous reference current value is specifically a current command reference value determined based on an operating status of the inverter or a theoretical output current value predicted by using a model. When a component in the inverter circuit DCAC is normal, the instantaneous output current value of the inverter circuit DCAC is approximately consistent with the instantaneous reference current value, in other words, a deviation between the instantaneous output current value and the instantaneous reference current value is small. When the component in the inverter circuit DCAC fails, an output current of the inverter circuit DCAC is abnormal, and consequently, the difference between the instantaneous output current value and the instantaneous reference current value increases. In this application, the instantaneous output current value is compared with the instantaneous reference current value in real time. When the absolute value of the difference between the instantaneous output current value and the instantaneous reference current value is greater than (or exceeds) the specified protection threshold, it is considered that the output current is abnormal. Sending a PWM driver gating signal is stopped when it is determined that the absolute value is greater than the protection threshold for the specified duration, to avoid frequently stopping sending a PWM driver gating signal due to misjudgment. Stopping sending a PWM driver gating signal is to turn off the switching transistor in the inverter circuit DCAC, to cut off an output of the inverter, to avoid a continuous increase in the output current and protect the inverter against further damage.

In comparison, in an existing output current anomaly determining mechanism, stopping sending a PWM driver gating signal is triggered for an abnormal output current only when an output current is greater than an upper current threshold that is a constant value or when an output current is less than a lower current threshold that is a constant value. Consequently, sending a PWM driver gating signal is stopped at a late time point after the abnormal output current is recognized, and sending a PWM driver gating signal is stopped only when an absolute value of the output current is large. Therefore, a switching transistor in an inverter needs to be subject to high voltage and current stress, leading to a risk of a component failure due to excessively high voltage or current stress. In addition, because an output current of the inverter at an initial moment at which a fault occurs does not meet a condition for stopping sending a PWM driver gating signal, sending a PWM driver gating signal cannot be stopped at the initial moment at which the fault occurs, leading to expansion of an area affected by the fault. In an output current anomaly determining mechanism provided in this application, at any moment of an output current waveform of the inverter circuit DCAC, provided that the absolute value of the difference between the instantaneous output current value and the instantaneous reference current value increases to be greater than the protection threshold, it can be determined that the output current is in an abnormal working condition. An abnormal output current may be recognized at an initial moment at which a fault occurs, and sending a PWM driver gating signal is immediately stopped, without waiting until the output current increases to a large value. In this way, when sending a PWM driver gating signal is stopped, voltage and current stress that the switching transistor needs to be subject to is low, to reduce a risk of a component failure due to excessively high voltage or current stress. In addition, because the abnormal output current is recognized at the initial moment at which the fault occurs and sending a PWM driver gating signal is immediately stopped, expansion of an area affected by the fault can be further avoided.

In this application, the instantaneous reference current value may be calculated in real time based on the operating status of the inverter. In some embodiments of this application, the theoretical output current value may be predicted based on the operating status of the inverter by using the model, and used as the instantaneous reference current value. Specifically, based on an output current value and an output voltage value at a present moment k, a theoretical output current value at a moment k+1 may be predicted as follows: $\left[\begin{matrix}{i}_{a} \left(k+1\right) \\ {i}_{b} \left(k+1\right) \\ {i}_{c} \left(k+1\right)\end{matrix}\right] = \left[\begin{matrix}{i}_{a} \left(k\right) \\ {i}_{b} \left(k\right) \\ {i}_{c} \left(k\right)\end{matrix}\right] + \frac{{T}_{s}}{L} \times \left(\left[\begin{matrix}{u}_{a} \left(k\right) \\ {u}_{b} \left(k\right) \\ {u}_{c} \left(k\right)\end{matrix}\right]-\left[\begin{matrix}{v}_{a} \left(k\right) \\ {v}_{b} \left(k\right) \\ {v}_{c} \left(k\right)\end{matrix}\right]-R\times \left[\begin{matrix}{i}_{a} \left(k\right) \\ {i}_{b} \left(k\right) \\ {i}_{c} \left(k\right)\end{matrix}\right]\right) .$

In the foregoing formula, *iₐ*(k+1) is a phase-A bridge-arm output current value at the moment k+1, *i_{b}*(k*+*1) is a phase-B bridge-arm output current value at the moment k+1, *i_{c}*(k+1) is a phase-C bridge-arm output current value at the moment k+1, *iₐ*(*k*) is a phase-A bridge-arm output current value at the moment k, *i_{b}*(k) is a phase-B bridge-arm output current value at the moment k, *i_{c}*(k) is a phase-C bridge-arm output current value at the moment k, *uₐ*(k) is a phase-A bridge-arm output voltage value at the moment k, *u_{b}*(k) is a phase-B bridge-arm output voltage value at the moment k, *u_{c}*(k) is a phase-C bridge-arm output voltage value at the moment k, *vₐ*(k) is a phase-A power grid voltage value at the moment k, *v_{b}*(k) is a phase-B power grid voltage value at the moment k, *v_{c}*(k) is a phase-C power grid voltage value at the moment k, L is an inductance of a filter inductor connected to the output end of the inverter circuit DCAC, R is an equivalent resistance of a filter component connected to the output end of the inverter circuit DCAC, and *Tₛ* is a switching cycle of the inverter circuit DCAC.

Based on an output current value and an output voltage value at a moment k+n-1, a theoretical output current value at a moment k+n may be predicted as follows: $\left[\begin{matrix}{i}_{a} \left(k+n\right) \\ {i}_{b} \left(k+n\right) \\ {i}_{c} \left(k+n\right)\end{matrix}\right] = \left[\begin{matrix}{i}_{a} \left(k+n-1\right) \\ {i}_{b} \left(k+n-1\right) \\ {i}_{c} \left(k+n-1\right)\end{matrix}\right] + \frac{{T}_{s}}{L} \times \left(\left[\begin{matrix}{u}_{a} \left(k+n-1\right) \\ {u}_{b} \left(k+n-1\right) \\ {u}_{c} \left(k+n-1\right)\end{matrix}\right]-\left[\begin{matrix}{v}_{a} \left(k+n-1\right) \\ {v}_{b} \left(k+n-1\right) \\ {v}_{c} \left(k+n-1\right)\end{matrix}\right]-R\times \left[\begin{matrix}{i}_{a} \left(k+n-1\right) \\ {i}_{b} \left(k+n-1\right) \\ {i}_{c} \left(k+n-1\right)\end{matrix}\right]\right) .$

In the foregoing formula, *iₐ*(k+n) is a phase-A bridge-arm output current value at the moment k+n, *i_{b}*(k+n) is a phase-B bridge-arm output current value at the moment k+n, *i_{c}*(k+n) is a phase-C bridge-arm output current value at the moment k+n, *iₐ*(k+n-1) is a phase-A bridge-arm output current value at the moment k+n-1, *i_{b}*(k+n-1) is a phase-B bridge-arm output current value at the moment k+n-1, *i_{c}*(k+n-1) is a phase-C bridge-arm output current value at the moment k+n-1, *uₐ*(k+n-1) is a phase-A bridge-arm output voltage value at the moment k+n-1, *u_{b}*(k+n-1) is a phase-B bridge-arm output voltage value at the moment k+n-1, *u_{c}*(k+n-1) is a phase-C bridge-arm output voltage value at the moment k+n-1, *vₐ*(k+n-1) is a phase-A power grid voltage value at the moment k+n-1, *v_{b}*(k+n-1) is a phase-B power grid voltage value at the moment k+n-1, *v_{c}*(k+n-1) is a phase-C power grid voltage value at the moment k+n-1, L is an inductance of the filter inductor connected to the output end of the inverter circuit DCAC, R is an equivalent resistance of the filter component connected to the output end of the inverter circuit DCAC, and *Tₛ* is a switching cycle of the inverter circuit DCAC.

In some other embodiments of this application, a current command reference value at a present moment may be calculated based on an average value of an active reference current command and a reactive reference current command of the inverter circuit DCAC within first preset time through rotation transformation from a rotating coordinate system to a stationary coordinate system, and the current command reference value is used as the instantaneous reference current value. The first preset time may be any moment.

In some other embodiments of this application, an instantaneous output current value obtained before second preset time may be buffered in a dynamic sliding window, where the second preset time is an integer multiple of a fundamental period of an output current of the inverter circuit DCAC, and the instantaneous output current value obtained before the second preset time is selected as an instantaneous reference current value at a present moment.

In some other embodiments of this application, an instantaneous output current value obtained before third preset time may be buffered in a dynamic sliding window, where the third preset time is half of a fundamental period of an output current of the inverter circuit DCAC, and a negative number of the instantaneous output current value obtained before the third preset time is selected as an instantaneous reference current value at a present moment.

In some other embodiments of this application, an instantaneous output current value obtained before fourth preset time may be buffered in a dynamic sliding window, where the fourth preset time is a quarter of a fundamental period of an output current of the inverter circuit DCAC, and a mirrored value of the instantaneous output current value obtained before the fourth preset time is selected as an instantaneous reference current value at a present moment.

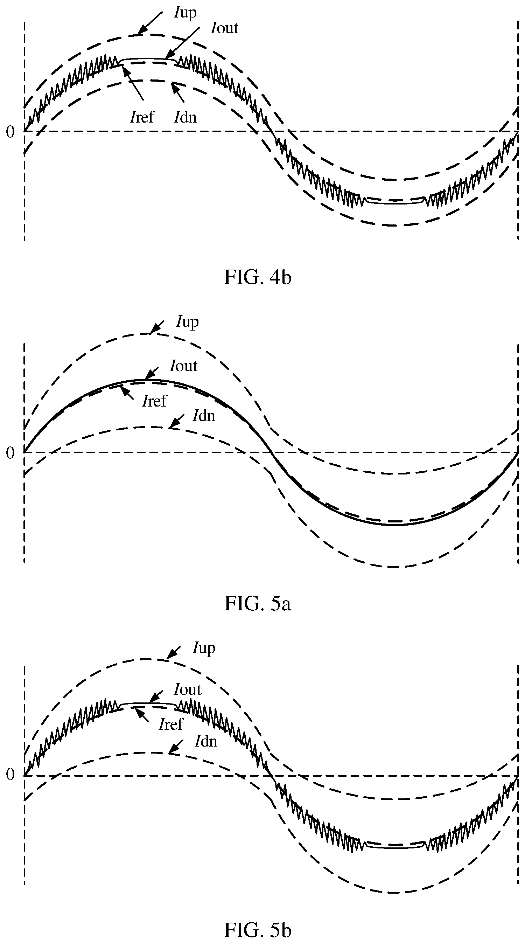

In this application, the protection threshold may be determined based on the operating status of the inverter. In some embodiments of this application, the protection threshold may be set to a constant value that does not vary with time, that is, a fixed value, to reduce an amount of calculation of the controller. As shown in FIG. 4a and FIG. 4b, a current anomaly protection curve may be obtained based on the protection threshold and the instantaneous reference current value. The current anomaly protection curve specifically includes a first protection curve Iup obtained by superposing the instantaneous reference current value Iref and the protection threshold, and a second protection curve Idn obtained by subtracting the protection threshold from the instantaneous reference current value Iref. If the output current is within a range between the first protection curve Iup and the second protection curve Idn, it is considered that the output current is normal. If the output current is beyond the range between the first protection curve Iup and the second protection curve Idn, it is considered that the output current is abnormal, and sending a PWM driver gating signal needs to be stopped.

In some other embodiments of this application, the protection threshold may be dynamically adjusted based on the operating status of the inverter. For example, the protection threshold is dynamically adjusted based on the following parameters: a direct current bus voltage, namely, an input voltage, the instantaneous reference current value, a difference between the input voltage and an output voltage amplitude, the output voltage amplitude, a load power factor, a modulation mode, and a switching frequency. As shown in FIG. 5a and FIG. 5b, a current anomaly protection curve may be obtained based on the protection threshold and the instantaneous reference current value. The current anomaly protection curve specifically includes a first protection curve Iup obtained by superposing the instantaneous reference current value Iref and the protection threshold, and a second protection curve Idn obtained by subtracting the protection threshold from the instantaneous reference current value Iref. If the output current is within a range between the first protection curve Iup and the second protection curve Idn, it is considered that the output current is normal. If the output current is beyond the range between the first protection curve Iup and the second protection curve Idn, it is considered that the output current is abnormal, and sending a PWM driver gating signal needs to be stopped.

As shown in FIG. 5a and FIG. 5b, specifically, the protection threshold may be controlled to be in a positive correlation relationship with an absolute value of the instantaneous reference current value of the inverter circuit. To be specific, a larger instantaneous reference current value indicates a larger protection threshold, and a smaller instantaneous reference current value indicates a smaller protection threshold.

Specifically, the protection threshold may be controlled to be in a positive correlation relationship with the input voltage value of the inverter circuit. To be specific, a larger input voltage value indicates a larger protection threshold, and a smaller input voltage value indicates a smaller protection threshold.

Specifically, the protection threshold may be controlled to be in a positive correlation relationship with the difference between the input voltage value and the output voltage amplitude of the inverter circuit. To be specific, a larger difference between the input voltage value and the output voltage amplitude indicates a larger protection threshold, and a smaller difference between the input voltage value and the output voltage amplitude indicates a smaller protection threshold.

Specifically, the protection threshold may be controlled to be in a negative correlation relationship with the output voltage amplitude of the inverter circuit. To be specific, a smaller output voltage amplitude indicates a larger protection threshold, and a larger output voltage amplitude indicates a smaller protection threshold.

Specifically, the protection threshold may be controlled to be in a negative correlation relationship with an absolute value of the load power factor of the inverter circuit. To be specific, a smaller absolute value of the load power factor indicates a larger protection threshold, and a larger absolute value of the load power factor indicates a smaller protection threshold.

Specifically, the protection threshold may be controlled to be in a negative correlation relationship with the switching frequency of the inverter circuit. To be specific, a lower switching frequency indicates a larger protection threshold, and a higher switching frequency indicates a smaller protection threshold.

Specifically, the protection threshold in a case in which the inverter circuit is in discontinuous modulation (DPWM) control may be controlled to be less than the protection threshold in a case in which the inverter circuit is in continuous modulation (SPWM) control.

Specifically, the protection threshold may be controlled to be in a negative correlation relationship with modulated-wave clamping time of the inverter circuit. To be specific, shorter modulated-wave clamping time indicates a larger protection threshold, and longer modulated-wave clamping time indicates a smaller protection threshold.

As shown in FIG. 4a and FIG. 5a, in some embodiments of this application, when the controller compares the instantaneous output current value with the instantaneous reference current value in real time, the controller may use an average value of instantaneous output current sampling values within a switching cycle as the instantaneous output current value of the inverter circuit, to reduce an amount of calculation of the controller and increase a calculation speed.

As shown in FIG. 4b and FIG. 5b, in some embodiments of this application, when the controller compares the instantaneous output current value with the instantaneous reference current value in real time, the controller may directly use an instantaneous output current sampling value as the instantaneous output current value of the inverter circuit, to improve accuracy of calculation performed by the controller to determine whether the output current is abnormal.

In some embodiments of this application, during operation, the inverter may determine, in real time, whether an absolute value of a variation of an output voltage is greater than a preset voltage threshold, and determine, in real time, whether an absolute value of a variation of the instantaneous reference current value is greater than a preset current threshold. The absolute value of the variation of the instantaneous reference current value being less than the preset current threshold and the absolute value of the variation of the output voltage being less than the preset voltage threshold indicates that the inverter is not in a steady operating state at a present moment, and the foregoing output current anomaly protection determining provided in this application may be performed.

In this application, a type of the inverter circuit DCAC is not limited. Specifically, the inverter circuit DCAC may be a two-level inverter circuit, a three-level ANPC inverter circuit, a three-level NPC inverter circuit, a three-level T-type inverter circuit, a three-level flying-capacitor inverter circuit, a five-level ANPC inverter circuit, a five-level NPC inverter circuit, a five-level flying-capacitor inverter circuit, a multi-level ANPC inverter circuit, or another hybrid multi-level inverter circuit.

In some embodiments of this application, when the inverter includes only the inverter circuit DCAC, stopping sending a PWM driver gating signal may be specifically controlling switching transistors in the inverter circuit DCAC to be turned off in a specified sequence, for example, first turning off a switching transistor on an outer side of a bridge arm, and then turning off a switching transistor on an inner side of the bridge arm. In some other embodiments of this application, when the inverter further includes the direct current conversion circuit DCDC, stopping sending a PWM driver gating signal may further include: controlling switching transistors in the direct current conversion circuit DCDC to be turned off in a specified sequence, for example, first turning off a switching transistor on an outer side of a bridge arm, and then turning off a switching transistor on an inner side of the bridge arm. When a relay is disposed at an output interface of the inverter, the relay may be further turned off.

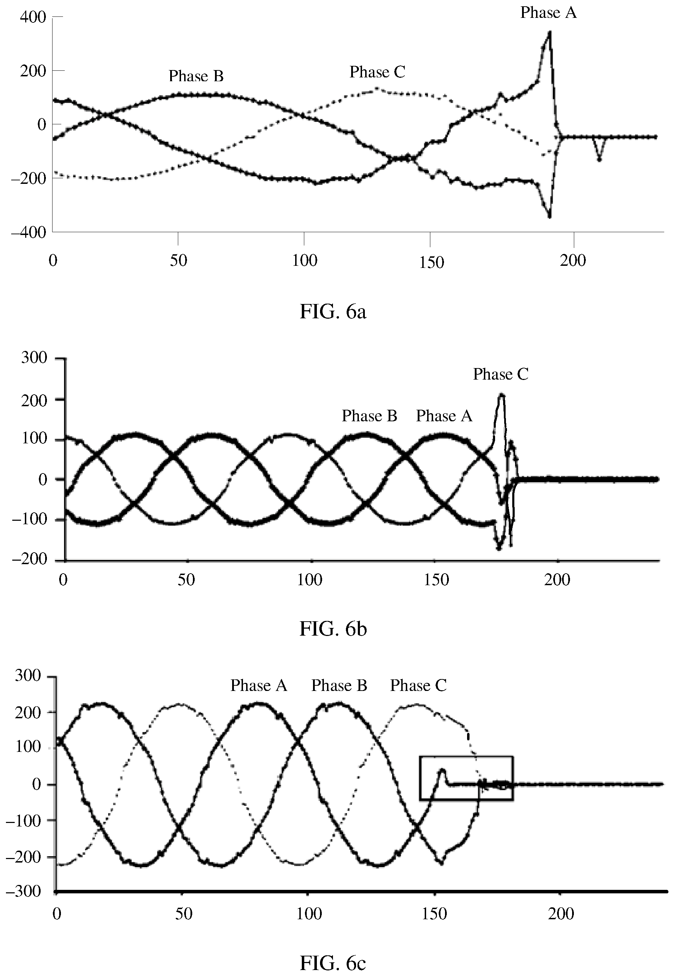

FIG. 6a shows an output current waveform in a case in which an existing output current anomaly determining mechanism is used. To be specific, stopping sending a PWM driver gating signal is triggered for an abnormal output current only when the output current is greater than an upper current threshold that is a constant value or the output current is less than a lower current threshold that is a constant value. It can be learned that sending a PWM driver gating signal is stopped only when a value of the abnormal output current is large. Consequently, a switching transistor in an inverter needs to be subject to high voltage and current stress, leading to a risk of a component failure due to excessively high voltage or current stress. FIG. 6b shows an output current waveform upon a short-circuit fault of a switching transistor in a case in which the foregoing output current anomaly determining mechanism provided in this application is used. FIG. 6c shows an output current waveform upon an open-circuit fault of a switching transistor in a case in which the foregoing output current anomaly determining mechanism provided in this application is used. It can be learned that, when a fault occurs, according to the foregoing output current anomaly determining mechanism provided in this application, an output current fault can be quickly recognized, and sending a PWM driver gating signal is stopped. In this way, when sending a PWM driver gating signal is stopped, voltage and current stress that the switching transistor needs to be subject to is low, to reduce a risk of a component failure due to excessively high voltage or current stress, and improve reliability of the inverter.

Based on a same inventive concept, embodiments of this application further provide an output current anomaly protection method for an inverter, including: when an absolute value of a difference between an instantaneous output current value and an instantaneous reference current value of the inverter is greater than a protection threshold for specified duration, stopping sending a PWM driver gating signal, in other words, controlling a switching transistor in the inverter to be turned off, where the instantaneous output current value varies with the instantaneous reference current value, and the instantaneous reference current value is specifically a current command reference value determined based on an operating status of the inverter or a theoretical output current value predicted by using a model. When a component in the inverter is normal, the instantaneous output current value of the inverter is approximately consistent with the instantaneous reference current value, in other words, a deviation between the instantaneous output current value and the instantaneous reference current value is small. When the component in the inverter fails, an output current of the inverter is abnormal, and consequently, the difference between the instantaneous output current value and the instantaneous reference current value increases. In this application, the instantaneous output current value is compared with the instantaneous reference current value in real time. When the absolute value of the difference between the instantaneous output current value and the instantaneous reference current value is greater than (or exceeds) the specified protection threshold, it is considered that the output current is abnormal. Sending a PWM driver gating signal is stopped when it is determined that the absolute value is greater than the protection threshold for the specified duration, to avoid frequently stopping sending a PWM driver gating signal due to misjudgment. Stopping sending a PWM driver gating signal is to turn off the switching transistor, to cut off an output of the inverter, to avoid a continuous increase in the output current and protect the inverter against further damage.

In comparison, in an existing output current anomaly determining mechanism, stopping sending a PWM driver gating signal is triggered for an abnormal output current only when an output current is greater than an upper current threshold that is a constant value or when an output current is less than a lower current threshold that is a constant value. Consequently, sending a PWM driver gating signal is stopped at a late time point after the abnormal output current is recognized, and sending a PWM driver gating signal is stopped only when an absolute value of the output current is large. Therefore, a switching transistor in an inverter needs to be subject to high voltage and current stress, leading to a risk of a component failure due to excessively high voltage or current stress. In addition, because an output current of the inverter at an initial moment at which a fault occurs does not meet a condition for stopping sending a PWM driver gating signal, sending a PWM driver gating signal cannot be stopped at the initial moment at which the fault occurs, leading to expansion of an area affected by the fault. In an output current anomaly determining mechanism provided in this application, at any moment of an output current waveform of the inverter, provided that the absolute value of the difference between the instantaneous output current value and the instantaneous reference current value increases to be greater than the protection threshold, it can be determined that the output current is in an abnormal working condition. An abnormal output current may be recognized at an initial moment at which a fault occurs, and sending a PWM driver gating signal is immediately stopped, without waiting until the output current increases to a large value. In this way, when sending a PWM driver gating signal is stopped, voltage and current stress that the switching transistor needs to be subject to is low, to reduce a risk of a component failure due to excessively high voltage or current stress. In addition, because the abnormal output current is recognized at the initial moment at which the fault occurs and sending a PWM driver gating signal is immediately stopped, expansion of an area affected by the fault can be further avoided.

In this application, the instantaneous reference current value may be calculated in real time based on the operating status of the inverter. In some embodiments of this application, the theoretical output current value may be predicted based on the operating status of the inverter by using the model, and used as the instantaneous reference current value. Specifically, based on an output current value and an output voltage value at a present moment k, a theoretical output current value at a moment k+1 may be predicted as follows: $\left[\begin{matrix}{i}_{a} \left(k+1\right) \\ {i}_{b} \left(k+1\right) \\ {i}_{c} \left(k+1\right)\end{matrix}\right] = \left[\begin{matrix}{i}_{a} \left(k\right) \\ {i}_{b} \left(k\right) \\ {i}_{c} \left(k\right)\end{matrix}\right] + \frac{{T}_{s}}{L} \times \left(\left[\begin{matrix}{u}_{a} \left(k\right) \\ {u}_{b} \left(k\right) \\ {u}_{c} \left(k\right)\end{matrix}\right]-\left[\begin{matrix}{v}_{a} \left(k\right) \\ {v}_{b} \left(k\right) \\ {v}_{c} \left(k\right)\end{matrix}\right]-R\times \left[\begin{matrix}{i}_{a} \left(k\right) \\ {i}_{b} \left(k\right) \\ {i}_{c} \left(k\right)\end{matrix}\right]\right) .$

In the foregoing formula, *iₐ*(k+1) is a phase-A bridge-arm output current value at the moment k+1, *i_{b}*(k+1) is a phase-B bridge-arm output current value at the moment k+1, *i_{c}*(k+1) is a phase-C bridge-arm output current value at the moment k+1, *iₐ*(k) is a phase-A bridge-arm output current value at the moment k, *i_{b}*(*k*) is a phase-B bridge-arm output current value at the moment k, *i_{c}*(k) is a phase-C bridge-arm output current value at the moment k, *uₐ*(k) is a phase-A bridge-arm output voltage value at the moment k, *u_{b}*(k) is a phase-B bridge-arm output voltage value at the moment k, *u_{c}*(k) is a phase-C bridge-arm output voltage value at the moment k, *vₐ*(k) is a phase-A power grid voltage value at the moment k, *v_{b}*(k) is a phase-B power grid voltage value at the moment k, *v_{c}*(k) is a phase-C power grid voltage value at the moment k, L is an inductance of a filter inductor connected to an output end of the inverter, R is an equivalent resistance of a filter component connected to the output end of the inverter, and *Tₛ* is a switching cycle of the inverter.

Based on an output current value and an output voltage value at a moment k+n-1, a theoretical output current value at a moment k+n may be predicted as follows: $\left[\begin{matrix}{i}_{a} \left(k+n\right) \\ {i}_{b} \left(k+n\right) \\ {i}_{c} \left(k+n\right)\end{matrix}\right] = \left[\begin{matrix}{i}_{a} \left(k+n-1\right) \\ {i}_{b} \left(k+n-1\right) \\ {i}_{c} \left(k+n-1\right)\end{matrix}\right] + \frac{{T}_{s}}{L} \times \left(\left[\begin{matrix}{u}_{a} \left(k+n-1\right) \\ {u}_{b} \left(k+n-1\right) \\ {u}_{c} \left(k+n-1\right)\end{matrix}\right]-\left[\begin{matrix}{v}_{a} \left(k+n-1\right) \\ {v}_{b} \left(k+n-1\right) \\ {v}_{c} \left(k+n-1\right)\end{matrix}\right]-R\times \left[\begin{matrix}{i}_{a} \left(k+n-1\right) \\ {i}_{b} \left(k+n-1\right) \\ {i}_{c} \left(k+n-1\right)\end{matrix}\right]\right) .$

In the foregoing formula, *iₐ*(k+n) is a phase-A bridge-arm output current value at the moment k+n, *i_{b}*(k+n) is a phase-B bridge-arm output current value at the moment k+n, *i_{c}*(k+n) is a phase-C bridge-arm output current value at the moment k+n, *iₐ*(k+n-1) is a phase-A bridge-arm output current value at the moment k+n-1, *i_{b}*(k+n-1) is a phase-B bridge-arm output current value at the moment k+n-1, *i_{c}*(k+n-1) is a phase-C bridge-arm output current value at the moment k+n-1, *uₐ*(k+n-1) is a phase-A bridge-arm output voltage value at the moment k+n-1, *u_{b}*(k+n-1) is a phase-B bridge-arm output voltage value at the moment k+n-1, *u_{c}*(k+n-1) is a phase-C bridge-arm output voltage value at the moment k+n-1, *vₐ*(k+n-1) is a phase-A power grid voltage value at the moment k+n-1, *v_{b}*(k+n-1) is a phase-B power grid voltage value at the moment k+n-1, *v_{c}*(k+n-1) is a phase-C power grid voltage value at the moment k, L is an inductance of the filter inductor connected to the output end of the inverter, R is an equivalent resistance of the filter component connected to the output end of the inverter, and *Tₛ* is a switching cycle of the inverter.

In some other embodiments of this application, a current command reference value at a present moment may be calculated based on an average value of an active reference current command and a reactive reference current command within first preset time through rotation transformation from a rotating coordinate system to a stationary coordinate system, and the current command reference value is used as the instantaneous reference current value. The first preset time may be any moment.

In some other embodiments of this application, an instantaneous output current value obtained before second preset time may be buffered in a dynamic sliding window, where the second preset time is an integer multiple of a fundamental period of an output current, and the instantaneous output current value obtained before the second preset time is selected as an instantaneous reference current value at a present moment.

In some other embodiments of this application, an instantaneous output current value obtained before third preset time may be buffered in a dynamic sliding window, where the third preset time is half of a fundamental period of an output current, and a negative number of the instantaneous output current value obtained before the third preset time is selected as an instantaneous reference current value at a present moment.

In some other embodiments of this application, an instantaneous output current value obtained before fourth preset time may be buffered in a dynamic sliding window, where the fourth preset time is a quarter of a fundamental period of an output current, and a mirrored value of the instantaneous output current value obtained before the fourth preset time is selected as an instantaneous reference current value at a present moment.

In this application, the protection threshold may be determined based on the operating status of the inverter. In some embodiments of this application, the protection threshold may be set to a constant value that does not vary with time, that is, a fixed value, to reduce an amount of calculation.

In some other embodiments of this application, the protection threshold may be dynamically adjusted based on the operating status of the inverter. For example, the protection threshold is dynamically adjusted based on the following parameters: a direct current bus voltage, namely, an input voltage, the instantaneous reference current value, a difference between the input voltage and an output voltage amplitude, the output voltage amplitude, a load power factor, a modulation mode, and a switching frequency.

Specifically, the protection threshold may be controlled to be in a positive correlation relationship with an absolute value of the instantaneous reference current value of the inverter circuit. To be specific, a larger instantaneous reference current value indicates a larger protection threshold, and a smaller instantaneous reference current value indicates a smaller protection threshold.

Specifically, the protection threshold may be controlled to be in a positive correlation relationship with the input voltage value of the inverter circuit. To be specific, a larger input voltage value indicates a larger protection threshold, and a smaller input voltage value indicates a smaller protection threshold.

Specifically, the protection threshold may be controlled to be in a positive correlation relationship with the difference between the input voltage value and the output voltage amplitude of the inverter circuit. To be specific, a larger difference between the input voltage value and the output voltage amplitude indicates a larger protection threshold, and a smaller difference between the input voltage value and the output voltage amplitude indicates a smaller protection threshold.

Specifically, the protection threshold may be controlled to be in a negative correlation relationship with the output voltage amplitude of the inverter circuit. To be specific, a smaller output voltage amplitude indicates a larger protection threshold, and a larger output voltage amplitude indicates a smaller protection threshold.

Specifically, the protection threshold may be controlled to be in a negative correlation relationship with an absolute value of the load power factor of the inverter circuit. To be specific, a smaller absolute value of the load power factor indicates a larger protection threshold, and a larger absolute value of the load power factor indicates a smaller protection threshold.

Specifically, the protection threshold may be controlled to be in a negative correlation relationship with the switching frequency of the inverter circuit. To be specific, a lower switching frequency indicates a larger protection threshold, and a higher switching frequency indicates a smaller protection threshold.

Specifically, the protection threshold in a case in which the inverter circuit is in discontinuous modulation (DPWM) control may be controlled to be less than the protection threshold in a case in which the inverter circuit is in continuous modulation (SPWM) control.

Specifically, the protection threshold may be controlled to be in a negative correlation relationship with modulated-wave clamping time of the inverter circuit. To be specific, shorter modulated-wave clamping time indicates a larger protection threshold, and longer modulated-wave clamping time indicates a smaller protection threshold.

In some embodiments of this application, when the instantaneous output current value is compared with the instantaneous reference current value in real time, an average value of instantaneous output current sampling values within a switching cycle may be used as the instantaneous output current value of the inverter circuit, to reduce an amount of calculation and increase a calculation speed.

In some embodiments of this application, when the instantaneous output current value is compared with the instantaneous reference current value in real time, an instantaneous output current sampling value may be directly used as the instantaneous output current value of the inverter circuit, to improve accuracy of calculation performed to determine whether the output current is abnormal.

In some embodiments of this application, during operation, the inverter may determine, in real time, whether an absolute value of a variation of an output voltage is greater than a preset voltage threshold, and determine, in real time, whether an absolute value of a variation of the instantaneous reference current value is greater than a preset current threshold. The absolute value of the variation of the instantaneous reference current value being less than the preset current threshold and the absolute value of the variation of the output voltage being less than the preset voltage threshold indicates that the inverter is not in a steady operating state at a present moment, and the foregoing output current anomaly protection determining provided in this application may be performed.

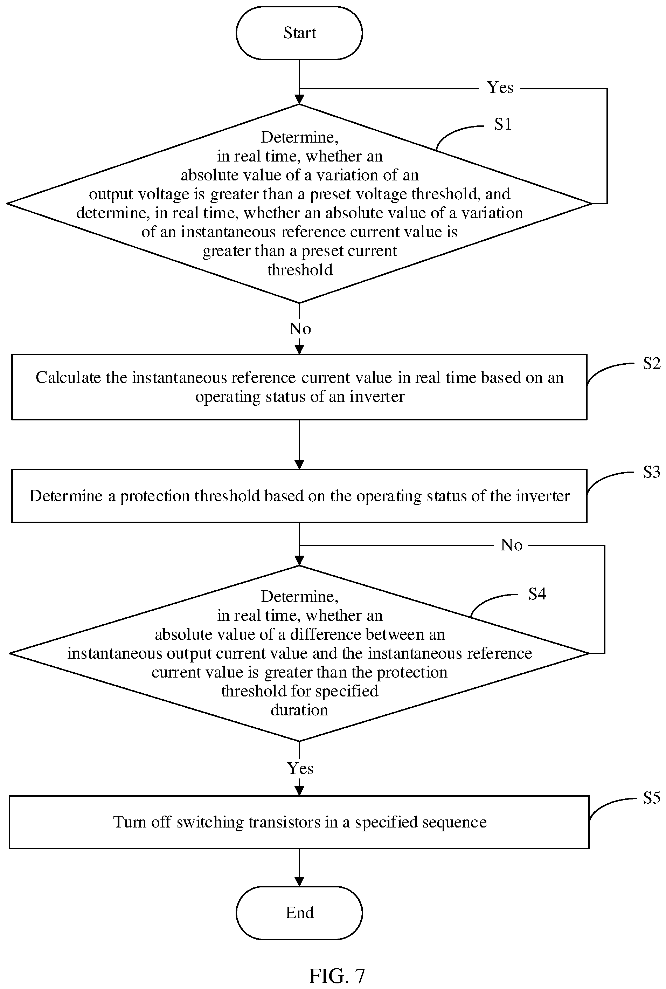

FIG. 7 shows a complete process of an output current anomaly protection method for an inverter according to an embodiment of this application. Specifically, the following steps are included.

S1: During operation of the inverter, determine, in real time, whether an absolute value of a variation of an output voltage is greater than a preset voltage threshold, and determine, in real time, whether an absolute value of a variation of an instantaneous reference current value is greater than a preset current threshold. The absolute value of the variation of the output voltage being less than the preset voltage threshold and the absolute value of the variation of the instantaneous reference current value being less than the preset current threshold indicates that the inverter is not in a steady operating state at a present moment, and step S2 is performed.

S2: Calculate the instantaneous reference current value in real time based on an operating status of the inverter.

Specifically, in some embodiments of this application, a theoretical output current value may be predicted by using a model, and used as the instantaneous reference current value.

In some other embodiments of this application, a current command reference value at a present moment may be calculated based on an average value of an active reference current command and a reactive reference current command of the inverter within first preset time through rotation transformation from a rotating coordinate system to a stationary coordinate system, and the current command reference value is used as the instantaneous reference current value. The first preset time may be any moment.

In some other embodiments of this application, an instantaneous output current value obtained before second preset time may be buffered in a dynamic sliding window, where the second preset time is an integer multiple of a fundamental period of an output current of the inverter, and the instantaneous output current value obtained before the second preset time is selected as an instantaneous reference current value at a present moment.

In some other embodiments of this application, an instantaneous output current value obtained before third preset time may be buffered in a dynamic sliding window, where the third preset time is half of a fundamental period of an output current of the inverter, and a negative number of the instantaneous output current value obtained before the third preset time is selected as an instantaneous reference current value at a present moment.

In some other embodiments of this application, an instantaneous output current value obtained before fourth preset time may be buffered in a dynamic sliding window, where the fourth preset time is a quarter of a fundamental period of an output current of the inverter, and a mirrored value of the instantaneous output current value obtained before the fourth preset time is selected as an instantaneous reference current value at a present moment.

S3: Determine a protection threshold based on the operating status of the inverter.

Specifically, in some embodiments of this application, the protection threshold may be set to a constant value that does not vary with time, that is, a fixed value, to reduce an amount of calculation.

In some embodiments of this application, the protection threshold may be dynamically adjusted based on the operating status of the inverter. For example, the protection threshold is dynamically adjusted based on the following parameters: a direct current bus voltage, namely, an input voltage, the instantaneous reference current value, a difference between the input voltage and an output voltage amplitude, the output voltage amplitude, a load power factor, a modulation mode, and a switching frequency.

Specifically, the protection threshold may be controlled to be in a positive correlation relationship with an absolute value of the instantaneous reference current value of the inverter. To be specific, a larger instantaneous reference current value indicates a larger protection threshold, and a smaller instantaneous reference current value indicates a smaller protection threshold.

Specifically, the protection threshold may be controlled to be in a positive correlation relationship with the input voltage value of the inverter. To be specific, a larger input voltage value indicates a larger protection threshold, and a smaller input voltage value indicates a smaller protection threshold.

Specifically, the protection threshold may be controlled to be in a positive correlation relationship with the difference between the input voltage value and the output voltage amplitude of the inverter. To be specific, a larger difference between the input voltage value and the output voltage amplitude indicates a larger protection threshold, and a smaller difference between the input voltage value and the output voltage amplitude indicates a smaller protection threshold.

Specifically, the protection threshold may be controlled to be in a negative correlation relationship with the output voltage amplitude of the inverter. To be specific, a smaller output voltage amplitude indicates a larger protection threshold, and a larger output voltage amplitude indicates a smaller protection threshold.

Specifically, the protection threshold may be controlled to be in a negative correlation relationship with an absolute value of the load power factor of the inverter. To be specific, a smaller absolute value of the load power factor indicates a larger protection threshold, and a larger absolute value of the load power factor indicates a smaller protection threshold.

Specifically, the protection threshold may be controlled to be in a negative correlation relationship with the switching frequency of the inverter. To be specific, a lower switching frequency indicates a larger protection threshold, and a higher switching frequency indicates a smaller protection threshold.

Specifically, the protection threshold in a case in which the inverter is in discontinuous modulation (DPWM) control may be controlled to be less than the protection threshold in a case in which the inverter is in continuous modulation (SPWM) control.

Specifically, the protection threshold may be controlled to be in a negative correlation relationship with modulated-wave clamping time of the inverter. To be specific, shorter modulated-wave clamping time indicates a larger protection threshold, and longer modulated-wave clamping time indicates a smaller protection threshold.

S4: Determine, in real time, whether an absolute value of a difference between the instantaneous output current value and the instantaneous reference current value is greater than the protection threshold for specified duration. If it is determined that the absolute value of the difference between the instantaneous output current value and the instantaneous reference current value is greater than the protection threshold for the specified duration, it is determined that the output current is abnormal, and step S5 is performed.

S5: Turn off switching transistors in a specified sequence. For example, a switching transistor on an outer side of a bridge arm is first turned off, and then a switching transistor on an inner side of the bridge arm is turned off. When a relay is disposed at an output interface of the inverter, the relay may be further turned off.

According to the inverter and the output current anomaly protection method for the inverter that are provided in embodiments of this application, the instantaneous output current value is compared with the instantaneous reference current value in real time. When the absolute value of the difference between the instantaneous output current value and the instantaneous reference current value is greater than the specified protection threshold, it is considered that the output current is abnormal. Sending a PWM driver gating signal is stopped when it is determined that the absolute value is greater than the protection threshold for the specified duration, to avoid frequently stopping sending a PWM driver gating signal due to misjudgment. Stopping sending a PWM driver gating signal is to turn off the switching transistor, to cut off an output of the inverter, to avoid a continuous increase in the output current and protect the inverter against further damage. Whether an abnormal working condition in which the output current deviates from a reference current value occurs is determined, so that an abnormal current can be recognized at an initial moment at which a fault occurs, to reduce voltage or current stress applied to a component of the inverter when sending a PWM driver gating signal is stopped, and improve reliability of the inverter.

Clearly, a person skilled in the art may make various modifications and variations to the present invention without departing from the scope of the present invention. The present invention is intended to cover these modifications and variations provided that they fall within the scope of the claims of the present invention and their equivalent technologies.

## Claims

1. An inverter, comprising an inverter circuit and a controller, wherein the inverter circuit comprises a switching transistor, wherein
an input end of the inverter circuit is configured to connect to a direct current bus, an output end of the inverter circuit is configured to connect to a power grid, and the inverter circuit is configured to convert a direct current provided by the direct current bus into an alternating current for output; and
the controller is configured to: when an absolute value of a difference between an instantaneous output current value and an instantaneous reference current value of the inverter circuit is greater than a protection threshold for specified duration, control the switching transistor to be turned off, wherein the instantaneous output current value varies with the instantaneous reference current value.

2. The inverter according to claim 1, wherein the controller is configured to control the protection threshold to be a constant value.

3. The inverter according to claim 1, wherein the controller is configured to control the protection threshold to be in a positive correlation relationship with an absolute value of the instantaneous reference current value of the inverter circuit; or
the controller is configured to control the protection threshold to be in a positive correlation relationship with an input voltage value of the inverter circuit; or
the controller is configured to control the protection threshold to be in a positive correlation relationship with a difference between an input voltage value and an output voltage amplitude of the inverter circuit; or
the controller is configured to control the protection threshold to be in a negative correlation relationship with an output voltage amplitude of the inverter circuit; or
the controller is configured to control the protection threshold to be in a negative correlation relationship with an absolute value of a load power factor of the inverter circuit; or
the controller is configured to control the protection threshold to be in a negative correlation relationship with a switching frequency of the inverter circuit; or
the controller is configured to: control a protection threshold in a case in which the inverter circuit is in discontinuous modulation control to be less than the protection threshold in a case in which the inverter circuit is in continuous modulation control; or
the controller is configured to control the protection threshold to be in a negative correlation relationship with modulated-wave clamping time of the inverter circuit.

4. The inverter according to any one of claims 1 to 3, wherein the controller is configured to: when an absolute value of a variation of the instantaneous reference current value of the inverter circuit is less than a preset current threshold and an absolute value of a variation of an output voltage of the inverter circuit is less than a preset voltage threshold, determine whether the absolute value of the difference between the instantaneous output current value and the instantaneous reference current value of the inverter circuit is greater than the protection threshold.

5. The inverter according to any one of claims 1 to 4, wherein the controller is configured to use an instantaneous output current sampling value of the inverter circuit as the instantaneous output current value of the inverter circuit; or
the controller is configured to use an average value of instantaneous output current sampling values of the inverter circuit within a switching cycle as the instantaneous output current value of the inverter circuit.

6. An output current anomaly protection method for an inverter, comprising:
when an absolute value of a difference between an instantaneous output current value and an instantaneous reference current value of the inverter is greater than a protection threshold for specified duration, controlling a switching transistor in the inverter to be turned off, wherein the instantaneous output current value varies with the instantaneous reference current value.

7. The method according to claim 6, further comprising: controlling the protection threshold to be a constant value.

8. The method according to claim 6, further comprising:
controlling the protection threshold to be in a positive correlation relationship with an absolute value of the instantaneous reference current value of the inverter; or
controlling the protection threshold to be in a positive correlation relationship with an input voltage value of the inverter; or
controlling the protection threshold to be in a positive correlation relationship with a difference between an input voltage value and an output voltage amplitude of the inverter; or
controlling the protection threshold to be in a negative correlation relationship with an output voltage amplitude of the inverter; or
controlling the protection threshold to be in a negative correlation relationship with an absolute value of a load power factor of the inverter; or
controlling the protection threshold to be in a negative correlation relationship with a switching frequency of the inverter; or
controlling the protection threshold in a case in which the inverter is in discontinuous modulation control to be less than the protection threshold in a case in which the inverter is in continuous modulation control; or
controlling the protection threshold to be in a negative correlation relationship with modulated-wave clamping time of the inverter.

9. The method according to any one of claims 6 to 8, further comprising:
when an absolute value of a variation of the instantaneous reference current value of the inverter is less than a preset current threshold and an absolute value of a variation of an output voltage of the inverter is less than a preset voltage threshold, determining whether the absolute value of the difference between the instantaneous output current value and the instantaneous reference current value of the inverter is greater than the protection threshold.

10. The method according to any one of claims 6 to 9, further comprising:
using an instantaneous output current sampling value of the inverter as the instantaneous output current value of the inverter; or
using an average value of instantaneous output current sampling values of the inverter within a switching cycle as the instantaneous output current value of the inverter.
